# EUROPÄISCHE PATENTANMELDUNG

(11) **EP 4 699 999 A1**
(43) Veröffentlichungstag der Anmeldung: **25.02.2026**
(21) Anmeldenummer: 24196267.9
(22) Anmeldetag: 23.08.2024
(51) Int. Cl.: C04B 30/02, E04C 2/16, E04B 1/74

(54) **SCHALLABSORBIERENDE ELEMENTE AUS REET-WELLERLEHM**

(71) Anmelder: Reeh, Ute, 40225 Düsseldorf (DE)
(72) Erfinder: Reeh, Ute, 40225 Düsseldorf (DE)
(74) Vertreter: Bogensberger, Burkhard

(57) **Zusammenfassung**

Die Erfindung bezieht sich auf Lehmelemente auf Basis einer verdichteten Reetwellerlehmmasse mit Schilfrohrhalmen unterschiedlicher Länge als akustisch wirksamem, eingearbeitetem Fasermaterial, wobei durch einen formgebenden Schneide-, Säge- oder Fräsvorgang der verdichteten Lehmmasse eine Vielzahl an Schilfrohrhalmen an- oder durchgeschnitten wird und dadurch nach aussen hin offene Hohlräume in den Oberflächen der Lehmelemente entstehen, die den Lehmelementen eine schallabsorbierende Funktionalität verleihen. Die Erfindung bezieht sich weiters auf die Herstellung und die Verwendung der Lehmelemente im Hoch-, Infrastruktur- und Landschaftsbau.

## Beschreibung

### TECHNISCHES GEBIET

Die vorliegende Erfindung liegt im Bereich des Bauwesens und bezieht sich auf die Herstellung von faserarmierten Lehmelementen mit schallabsorbierenden Oberflächen, vornehmlich zur Verwendung im nachhaltigen Hochbau, Infrastruktur- und Landschaftsbau.

### STAND DER TECHNIK

"Wellerlehm" bezeichnet in Deutschland üblicherweise ein historisches Baumaterial aus einer Masse aus Lehm, typischerweise Bodenaushub, vermischt mit Stroh als Armierung. Wellerlehm wurde zur Errichtung von Häusern und Scheunen seit Jahrhunderten traditionell von Hand ohne Schalung in Schichten aufgesetzt und in halb getrocknetem Zustand mit scharfem Spaten zur Begradigung der Oberfläche "abgestochen", wodurch im Regelfall massive tragende Lehmwände aus einem einzigen Stück gebildet wurden.

*Die Produktion von Wellerlehm für heutige Anwendungen muss hingegen mecha*nisiert erfolgen, um konkurrenzfähig zu sein. So offenbart beispielsweise EP3929169A1 ein Verfahren, bei dem durch eine hydraulische Presse, pneumatische Presse, Rüttelpresse oder durch Vibration eine fertig gemischte Wellerlehmmasse bis zu einer gewünschten Festigkeit verdichtet wird und daraus verbaubare Elemente aus Wellerlehm vorgefertigt werden.

Für Schallschutzwände - eine der angestrebten Anwendungen modernisierten Wellerlehms - ist jedoch eine schallabsorbierende Oberfläche erforderlich. Traditionelle und in Schalung oder in einer Presse gefertigte Wellerlehmelemente haben eine weitgehend schallharte Oberfläche, die Schall reflektiert. Derartige Wellerlehmelemente sind zwar dank ihrer Masse und Dichte *schalldämmend,* qualifizieren sich jedoch nicht als Schallschutzwände mit relevanter akustischer Wirkung. Bauelemente mit ausgelobter Schallschutzwirkung müssen zusätzlich schall*absorbierend* sein, d.h. den Schall möglichst wenig reflektieren.

Schallabsorption, d.h. eine Verminderung der Schallenergie, erreicht man u.a. durch Poren und nach außen hin offene Hohlräume in der Oberfläche eines Bauelements, z.B. einer Wand, in denen die Schallwellen gewissermaßen "gefangen" und mehrfach hin und her reflektiert werden, gegebenenfalls dabei Wirbel bilden und dabei einerseits durch die bewirkte Schallwegverlängerung und andererseits durch Dissipation, also Energieabgabe in Form von Reibungswärme an das umliegende Material, einen wesentlichen Teil ihrer ursprünglichen Schallenergie verlieren.

Wellerlehm ist ein Kompositmaterial aus Lehm, typischerweise Bodenaushub unterhalb der Humusschicht, und langfaserigen Pflanzenbestandteilen, in Deutschland üblicherweise Stroh aus Getreideanbau. Da Stroh von Landwirten nach der Getreideernte heute zumeist umgepflügt und wieder in den Boden eingearbeitet wird, sind alternative langfaserige Pflanzenbestandteile als mögliche Armierung für Lehmmassen gefragt, und zwar vorzugsweise solche, die bislang nicht oder wenig genutzt werden.

Für die kommerzielle, insbesondere industrielle, großtechnische Anwendung von modifiziertem Wellerlehm, d.h. Lehm mit Strohersatzmaterial, ist eine über Jahre gleichbleibende Qualität und zuverlässige Liefermöglichkeit in großen Mengen von entscheidender Bedeutung. Die Bereitstellung einer definierten Qualität ist für die Rezeptur des faserarmierten Lehmmaterials wichtig, da Anforderungen und Mindestkennwerte der einschlägigen Normen und Bauvorschriften im Hoch- und Infrastrukturbau einzuhalten sind. Aus ökologischer wie ökonomischer Sicht ist außerdem die möglichst regionale Verfügbarkeit der Rohmaterialien von besonderer Bedeutung.

All diesen Umständen wird mit der vorliegenden Erfindung Rechnung getragen.

### KURZE BESCHREIBUNG DER ERFINDUNG

Schilfrohr, auch als Reet bezeichnet, ist ein in Norddeutschland zur Deckung von Dächern traditionell genutztes Material. Moor- oder Sumpfflächen und Seeufer erzeugen jährlich große Mengen an Schilfrohr, das man abmähen und verwerten und damit zusätzlich den Erhalt bestimmter Landschaften und Ökotope fördern kann.

Im Hinblick auf eine alternative, modernisierte Wellerlehmherstellung ist Schilfrohr als wesentliches pflanzliches Armierungsfasermaterial aufgrund mehrerer Eigenschaften vorteilhaft:
- es hat eine größere Härte und höhere Zugfestigkeit als Stroh;
- weist eine hohe Silkathaltigkeit auf;
- weist ein vergleichsweise stabiles Hohlrohr auf, was für die Schallabsorption eine erforderliche, wesentliche Eigenschaft darstellt;
- es kann in großem Umfang jährlich geerntet werden;
- es weist weitestgehend gleichbleibende strukturelle, chemische und mechanische Materialeigenschaften auf;
- es bindet - wie Stroh oder jedes andere Pflanzenmaterial - als Grundmaterial Kohlenstoff, der in oxidierter Form als Bestandteil des Treibhausgases CO₂ aus der Atmosphäre entnommen wird. Der dadurch erzielte CO₂-reduzierende Effekt hält für die Lebensdauer des Materials an, im Falle der Verwendung in modifiziertem Wellerlehm also im besten Fall für Hunderte von Jahren.

Ein weiterer Vorteil der Verwendung von Schilfrohr ist, dass im Zuge von Naturschutz- und Klimamaßnahmen renaturierte sowie erhaltene Moor- und Sumpfflächen als Wirtschaftsflächen für Landwirte und als Teil einer Wertschöpfungskette zur Produktion von modifiziertem Wellerlehm Ertrag abwerfen können, während Schilfrohr heute in Deutschland praktisch so gut wie nicht verwertet wird.

### FIGURENBESCHREIBUNG

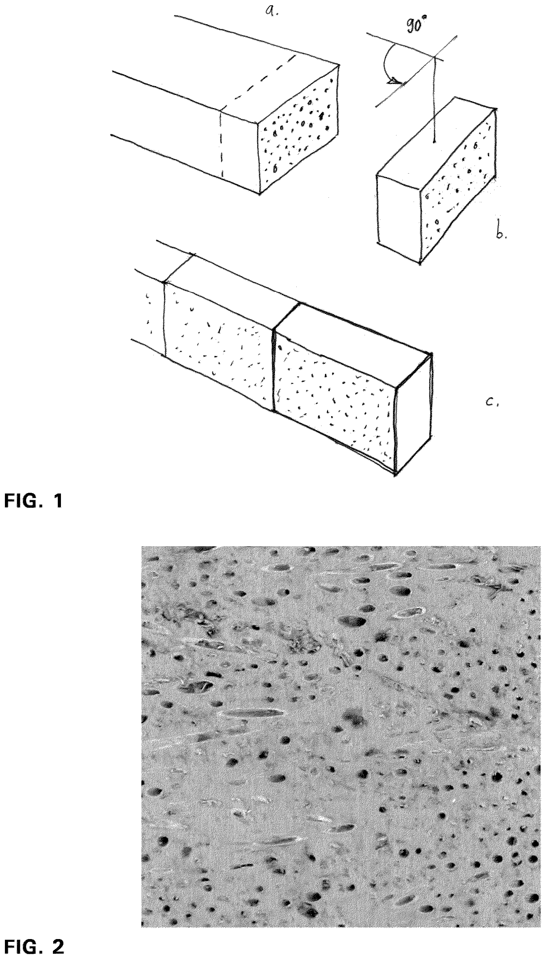

- Fig. 1: zeigt das Herstellungsprinzip der erfindungsgemäßen Lehmelemente mittels einer kontinuierlich arbeitenden Verdichtungseinrichtung, z.B. Schalungsraum, Druckkammer oder Presse, mit anschließendem Schneiden oder Sägen des dabei entstehenden Endlosstranges (a) aus verdichtetem, mit Schilfrohr armiertem Lehm (= Reetwellerlehm) in Einzelelemente (b) gewünschter Dicke/Wandstärke und stirnseitigem Aneinanderreihen der geschnittenen oder gesägten Lehmelemente zu einem Verbund (c), z.B. einer Schallschutzwand.
- Fig. 2: zeigt die Oberfläche eines erfindungsgemäß hergestellten Reetwellerlehm-Probekörpers mit unzähligen offenen Poren, Hohlräumen und Kanälen verschiedener Größe, Form und Orientierung.

### DETAILLIERTE BESCHREIBUNG DER ERFINDUNG

Die in EP 39291 69A1 beschriebene, maschinelle Herstellung von hochverdichtetem Wellerlehm in einer Presse erzeugt eine nahezu perfekt glatte Oberfläche, die schallreflektierend und somit für einen wirksamen Schallschutz nicht geeignet ist. Dieser erhebliche schalltechnische Nachteil konnte durch die folgenden Abänderungen des Herstellungsverfahrens aus EP 3929169A1 erfolgreich überwunden werden, nämlich:
a) durch die Verwendung von Schilfrohr als Haupt-Armierungsmaterial für die Lehmmasse. Messungen an erfindungsgemäß hergestellten Versuchskörpern mittels Impedanzrohr haben ergeben, dass offene Schilfrohrenden, optisch erkennbar als Poren, Löcher oder Kanäle in der Oberfläche des erfindungsgemäßen Lehmelements, die Schallabsorptionsfähigkeit der Lehmoberfläche deutlich erhöhen. Weiterhin konnte in diesen Tests nachgewiesen werden, dass die Länge der Halme aufgrund von Resonanzeffekten Einfluss auf die absorbierbaren Schallfrequenzen hat. In hoher Dichte und mit unterschiedlich langen Halmen bestückter Reetwellerlehm mit einer solcherart konfigurierten Oberfläche genügt den normativen bautechnischen Anforderungen für Schallschutzwände.
   Die angeschnittene Halme der in Fig.1 dargestellten Lehmquader (b, c) sind dabei nicht nur akustisch hochwirksam sondern erfüllen obendrein die wichtige Funktion von Erosionsbremsen, zur Verhinderung frühzeitiger Abwitterung der Oberflächen der Lehmelemente bei deren Einsatz im Außenbereich, beispielsweise als Lärmschutz, Sichtschutz, Kunstobjekt, oder Teil von Landschaftsgestaltungsprojekten. Bei solchen Anwendungen im Außenbereich ergibt sich obendrein ein erfreulicher Nebeneffekt dadurch, dass die offenen Schilfrohrenden an der Oberfläche des Materials Hohlräume bilden, die von verschiedenen Insekten, z.B. verschiedenen Solitärbienenarten, gerne als Brutraum genutzt werden, wodurch diese Lehmelemente auch einen Beitrag zur Biodiversität leisten. Die im Inneren des Materials eingeschlossenen Hohlräume wirken sich außerdem positiv auf die wärmedämmenden Eigenschaften der erfindungsgemässen Reetwellerlehmelemente aus.
b) durch eine ungerichtete, quasi "chaotische" Anordnung der Schilfrohrhalme: Die höchste Stabilität, Ökonomie in der Herstellung, und das breiteste Spektrum der absorbierten Schallfrequenzen wird durch eine chaotische, ungerichtete, rein zufällige Anordnung sowie durch unterschiedliche Längen der eingesetzten Schilfrohrhalme erreicht. Bevorzugte Längen der Schilfrohrhalme liegen in einem Bereich von ca. 5 cm bis ca. 50 cm; eine weitgehend parallele Anordnung der Schilfrohrhalme ist zwar grundsätzlich ebenfalls möglich, insbesondere im Verbund mit kleinteiligem, chaotisch verteiltem Fasermaterial, aber aufgrund des erhöhten Arbeitsaufwandes und der vergleichsweise geringeren Stabilität und Festigkeit der resultierenden Lehmelemente nicht bevorzugt; und
c) durch das Abtrennen mittels Schneiden, Sägen oder Fräsen von Elementen gewünschter Dicke in Schalungsrichtung oder quer zur Schalung bzw. zur Förderrichtung eines kontinuierlich aus einer Verdichtungsvorrichtung austretenden, vorgeformten Stranges aus Reetwellerlehm.

Die hierin verwendeten Begriffe "Schilfrohrhalm" und "Schilfrohrhalme" sind im Übrigen so zu verstehen, dass sie sich auf das ganze Schilfrohr beziehen, also sowohl den oberen, schlankeren Teil, als auch den unteren, dickeren und stärker verholzten Teil des Schilfrohrs umfassen.

Für die Herstellung von erfindungsgemäßen Reetwellerlehmelementen im industriellen Maßstab ist eine kontinuierliche Verfahrensvariante bevorzugt. So kann beispielsweise in einer als Endlospresse konzipierten Verdichtungsvorrichtung ein Endlosstrang aus erfindungsgemäßem Reetwellerlehm in einem Schalungskanal produziert und mittels einer Fördereinrichtung aus dem Schalungskanal hinaus zu einer Schneide- oder Sägevorrichtung gefördert werden, wo der Endlosstrang quer zu seiner Förderrichtung in einzelne Elemente, typischerweise in Blöcke in Quaderform mit rechteckigem oder quadratischem Querschnitt, beliebiger Dicke geschnitten oder gesägt werden kann (Fig. 1). Die Dicke wird dabei durch die Positionierung der Säge oder Schneidevorrichtung relativ zur verdichteten Reetwellerlehmmasse im Schalungsverfahren bzw. durch den veränderbaren Sägeabstand des aus dem Schalungskanal der Endlospresse austretenden Lehmstranges im Falle der kontinuierlichen Verfahrensweise bestimmt und entspricht im wesentlichen der gewünschten Wandstärke des erzeugten Lehmelements. Die dabei entstandenen quaderförmigen Blöcke werden vertikal oder horizontal derart verbaut, dass die geschnittenen oder gesägten Flächen die dem Schall zugewandten Wandflächen bilden. Eine Prinzipskizze dieses Vorgangs ist in Fig. 1 dargestellt.

Die Herstellung solcher Bauelemente aus Reetwellerlehm ist prinzipiell auch vor Ort, durch traditionell händisches Aufschichten oder in einer Schalung mittels pneumatischer Verdichtung und/oder Rüttelverdichtung möglich. Allerdings erfolgt in diesem Fall, nach Entfernen einer allenfalls verwendeten Schalung, das finale Sägen, Schneiden oder Fräsen des unter Umständen viele Meter langen Stranges aus verdichtetem Reetwellerlehm in Schalungsrichtung, d.h. in Längsrichtung des Stranges der rohen Lehmwand, deren Breite durch das Aufschichten bzw. durch die Schalung, die auch eine mobile Schalung sein kann, begrenzt wird. Typischerweise wird mit einer diamantbesetzten Mauerwerkssäge eine Schicht von einigen Zentimetern, z.B. 1 - 5 cm, Dicke von den Seitenflächen der rohen Lehmwand abgesägt oder mit anderen geeigneten Werkzeugen abgeschnitten oder abgefräst, um die eingeschlossenen Schilfhalme anzuschneiden und zu öffnen sowie gegebenenfalls eine Begradigung der Wandflächen herbeizuführen.

### BEISPIEL

Um miteinander vergleichbare Probekörper zu erzeugen, ist die jeweilige Lehmmasse in Formen einer festgelegten Größe (40 × 20 × 20 cm) verdichtet worden, aus der Form gelöst und unmittelbar danach in noch feuchtem Zustand in zwei gleich große Teilstücke zersägt worden (20 × 20 × 20 cm).

Dabei zeigte sich, dass wenn die Schilfrohrhalme parallel zueinander und senkrecht zur späteren Wandoberfläche angeordnet sind, die solcherart erzielten Baukörper aus Reetwellerlehm instabiler sind, weil die Zugkräfte im Inneren des Materials nur in eine Richtung, nämlich längs der im wesentlichen parallel ausgerichteten Fasern, abgeleitet werden. Es hat sich hingegen ebenfalls gezeigt, dass die ungeordnete, ungerichtete, möglichst chaotische Anordnung der Schilfrohrhalme im Lehmmaterial eine optimale Stabilität bewirkt, so dass die hergestellten Probekörper unmittelbar nach der Entnahme aus der Form gesägt werden konnten ohne sich zu verformen. Die mechanische Festigkeit, insbesondere Druckfestigkeit, der Reetwellerlehmelemente mit chaotischer (isotroper) Anordnung des Schilfrohrmaterials ist auffällig hoch. Eine optionale Zugabe zusätzlicher pflanzlicher oder tierischer Armierungsfasern in den die Schilfrohrhalme umhüllenden Lehm, zum Beispiel in Form von Stroh, insbeondere Hanfstroh, Getreidestroh, oder Maisstroh, und/oder tierischen Fasern wie Wollfasern, insbesondere aus Schafwolle, kann die mechanische Stabilität des Materials - speziell bei gerichtet angeordneten Schilfhalmen - zusätzlich erhöhen.

Um für die angestrebte Schallabsorption genügend offene Schilfrohrenden zu erzielen, wurde die Mischung der feuchten, faserarmierten Reetwellerlehmmasse dahingehend optimiert, dass der gewichtsmäßige Schilfrohranteil gegenüber dem Lehmanteil erhöht wurde und die Lehmmasse mit relativ hohem Wasseranteil in cremiger Konsistenz dem Fasermaterial mit den Schilfrohrhalmen zugesetzt wurde. Dadurch kann die Lehmmasse beim Verdichten unter Druck die Schilfrohrhalme gut umschließen und in alle Zwischenräume zwischen den Schilfrohr- und gegebenenfalls zusätzlichen Strohhalmen eindringen, so dass keine unerwünschten Hohlräume übrig bleiben. Der Wasseranteil wird je nach vorgesehenem Verwendungszweck der Lehmelemente bedarfsgerecht angepasst und kann nach erfolgtem Schneide- oder Sägevorgang der verdichteten und vorgeformten Reetwellerlehmmasse durch natürliche oder künstlich beschleunigte Trocknung auf einen erwünschten Wert eingestellt werden.

Als besonders effektiv für die Erzielung hoher Festigkeiten und guter Schallabsorptionsfähigkeit hat sich erwiesen, unterschiedlich lange Schilfrohrstücke mit der Lehmmasse zu kombinieren. Je nach Dimensionierung der Schalung bzw. je nach gewünschter Wandstärke der finalen Lehmelemente enthält eine erfindungsgemäße Reetwellerlehmmasse daher ein Gemisch unterschiedlich langer Schilfrohrhalme von vorzugsweise ca. 5 cm bis ca. 50 cm Länge, beispielsweise ein Gemisch von Schilfrohrhalmen mit Längen im Bereich von 5, 10, 15, 20, 25, 30, 35, 40, 45 und/oder 50 cm.

Das Grundmaterial Lehm sollte eine Mindestbindigkeit von 50 g/cm² haben. "Magerer" Lehm mit einer geringeren Bindigkeit kann mit Ton oder hochbindigem Lehm "fetter" gemacht werden, hochbindiger Lehm kann gegebenenfalls, wenn die jeweilige Anwendung dies erfordert, mit Sand "abgemagert" werden.Für die Materialmischung wird die Zusammensetzung üblicherweise nach Gewicht bestimmt, da wegen extrem unterschiedlicher Dichte und Konsistenz die Materialvolumina für eine Bestimmung zu ungenau sind.

Beim Ausgangsstoff Bodenaushub wird außerdem zuerst die Grundfeuchte bestimmt und dann die Menge an allenfalls noch hinzuzufügendem Wasser darauf abgestimmt.

Die Dimensionierung der aus Reetwellerlehm herstellbaren Bauelemente ist unterhalb eines zu empfehlenden Höchstmaßes von ca. 120-150 cm Seitenlänge, im Falle quaderförmiger Lehmblöcke, weitgehend beliebig. Je größer die Blöcke desto mehr gewinnt allerdings die Trocknungszeit an Bedeutung. Entsprechend muss der Wassergehalt abgesenkt werden.

Nachfolgend wird eine prinzipielle Vorgehensweise für die Herstellung erfindungsgemäßer Reetwellerlehmelemente beschrieben, die je nach Bedarf variiert werden kann und mit unterschiedlichem Werkzeug und unterschiedlichen Hilfsmitteln durchführbar ist, ohne vom Geist der vorliegenden Erfindung abzuweichen:
a) Bei Bodenaushub: Lehmbindigkeit bestimmen;
b) Grundfeuchte bestimmen. Dazu kann eine Probe feuchten Lehms gewogen werden, dann getrocknet und erneut gewogen werden. Aus der Gewichtsdifferenz ergibt sich der Wassergehalt;
c) Bodenaushub gegebenenfalls sieben und von Steinen befreien;
d) die Bindigkeit gegebenenfalls durch Zugabe von Ton erhöhen oder mit Sand absenken;
e) Lehm durch Wasserzugabe auf den gewünschten Wassergehalt zu einer homogenen klumpenfreien Masse, vorzugsweise cremiger, fließfähiger Konsistenz, anmischen;
f) gegebenenfalls die Lehmmasse mit optionalen organischen Nichtschilf-Bestandteilen wie z.B. Hanfstroh, Getreidestroh, Maisstroh oder anderem geeigneten, vorzugsweise regional vorkommendem, pflanzlichen Fasermaterial gründlich vermischen und 24 Stunden mauken lassen;
g) Schilfrohr in kurze Stücke schneiden. Die Stücke sollten unterschiedliche Längen zwischen 5 und 50 cm haben. Das Schneiden von Schilfrohrbündeln kann beispielsweise mittels Kreissäge, Bandsäge oder anderen Sägen, oder mittels Trennschneider oder anderem Schneidegerät erfolgen. Das Zuschneiden auf unterschiedliche Längen hat dabei den Zweck, eine höhere Schilfrohr-Dichte im chaotischen, richtungslosen Verband in der Lehmmasse zu erzielen (vergleichbar etwa mit der Korngrößenverteilung im Stampflehmbau);
h) die unterschiedlich langen Schilfrohrhalme gut miteinander vermischen;
i) die Mischung der Schilfrohrhalme mit der vorzugsweise cremigen und gegebenenfalls fließfähigen Lehmmasse vereinen, wobei vorzugsweise die Lehmmasse zur Mischung der Schilfrohrhalme hinzugegeben wird; wobei die Menge des Schilfrohrs die Menge der hinzuzugebenden Lehmmasse bestimmt, oder umgekehrt die Menge an gegebener Lehmmasse die Menge an einzusetzendem Schilfrohrmaterial bestimmt. Die Anteile der Komponenten der erfindungsgemäßen Reetwellerlehmmasse betragen je nach Eigenschaften des Rohlehms und der gewünschten Eigenschaften des Endprodukts vorzugsweise (in *Gewichtsprozent*):

| | |
|---|---|
| - Lehm | ca. 67-85 % |
| - Wasser | ca. 12-25 % |
| - Schilfrohr | ca. 2-11 % |

j) Überführen der fertig gemischten Reetwellerlehmmassse in eine Schalung oder in einen Verdichtungskanal oder in eine Presskammer. Dabei werden die Breite und Höhe der zu erzeugenden Lehmelemente durch die Abmessungen der Schalung, des Verdichtungskanals oder der Presskammer vorbestimmt, die Länge bzw. Dicke der Lehmelemente wird hingegen erst nach dem Ausschalen ( = Entfernung der Schalung) bzw. nach dem Austritt des verdichteten Lehmstranges aus dem Verdichtungskorridor bzw. der Presskammer durch einen Schneide- oder Sägevorgang bestimmt. Sie ist identisch mit der gewünschten Wandstärke des dabei gewonnenen Lehmelements;
k) Verdichten: in einer typischen Ausführungsform des Verfahrens wird die Reetwellerlehm-Mischung in Lagen von vorzugsweise ca. 20-30 cm Höhe/Dicke in die Presskammer, den Verdichtungskanal oder in die Schalung gefüllt und vorsichtig so verdichtet, dass die Schilfrohrhalme dabei möglichst nicht zerdrückt werden. Dies wird durch die cremig und fließfähig eingestellte Lehmmasse begünstigt, welche die Halme schon vor dem Verdichten umhüllt;
l) die auf diese Weise erzeugte, verdichtete, Reetwellerlehmmasse kann direkt nach dem Verdichten ausgeschalt bzw. bei der automatischen Produktion aus der Druckkammer hinausgeschoben oder aus dem Verdichtungskanal hinaus gefördert werden, worauf, analog zu Wurstscheiben im Lebensmittelbereich, einzelne "Scheiben" gewünschter Stärke bzw. Dicke von der verdichteten, vorgeformten Reetwellerlehmmasse abgetrennt, d.h. mittels einer Schneide- oder Sägevorrichtung abgeschnitten oder abgesägt werden. Durch den Schneide- oder Sägevorgang werden unzählige lange und kurze, kreuz und quer angeordnete Schilfrohrhalme angeschnitten oder durchgeschnitten, wodurch an den Schnittflächen nach aussen hin offene Poren, Löcher und Kanäle unterschiedlicher Durchmesser, unterschiedlicher geometrischer Formen, unterschiedlicher Länge, und unterschiedlicher Ausrichtung gebildet werden, wie z.T. aus Abb. 2 ersichtlich. Die abgetrennten Lehmelemente werden dann derart zu vertikalen Wänden oder Flächenelementen verbaut, dass die durch den Schneide- oder Sägevorgang erzeugten Oberflächen der Lehmelemente die jeweiligen Wandflächen bilden, die bei bestimmungsgemäßem Einsatz den Schallquellen zugewandt sind. Typischerweise werden diese Lehmelemente stirnseitig, also um einen Winkel von 90° gegenüber der Schneide- oder Sägerichtung gedreht, aneinander gereiht und - beispielsweise mittels Lehmmörtel - miteinander verbunden, um daraus z.B. eine schallabsorbierende tragende oder nicht-tragende Lehmwand in einem Gebäude zu errichten. Es sind aber natürlich auch andere als lineare Anordnungen einzelner Lehmelemente zu Verbundelementen möglich, ohne die schallabsorbierenden Fähigkeiten der Oberflächen zu beeinträchtigen.
Wesentlich ist, dass möglichst viele an- oder durchgeschnittene Schilfhalme als Löcher, Poren und Kanäle offen an den gesägten oder geschnittenen Oberflächen erscheinen (Abb. 2) und die Oberflächen dadurch schallabsorbierend werden. Zugleich erfüllen die abgeschnittenen Schilfrohrhalme auch die Funktion von Erosionsbremsen und verhindern oder reduzieren die Verwitterung der Oberflächen der Lehmelemente bei deren Anwendung im Außenbereich. Die im Inneren der Lehmelemente eingeschlossenen, nicht angesägten Schilfhalme hingegen erhöhen durch ihre geschlossenen Hohlkammern die wärmedämmende Funktion dieser Lehmelemente und der damit errichteten Wände und sonstigen Flächen.
Das Zuschneiden der Lehmelemente kann mittels Kreissäge, Bandsäge oder mittels einer anderen geeigneten Schneide- oder Sägevorrichtung erfolgen;
m) eine anschließende Trocknung der erfindungsgemäßen Lehmelemente kann durch natürliche oder künstliche Belüftung beschleunigt werden. Durch den Trocknungsvorgang schrumpfen die Lehmelemente geringfügig, was ihre Verwendbarkeit für die vorgesehenen Einsatzzwecke aber nicht schmälert;
n) allenfalls mit Lehm verschmierte Poren, Löcher und/oder Kanäle in der Oberfläche der verdichteten Lehmelemente, hervorgerufen durch den Säge- oder Schneidevorgang der verdichteten Lehmmasse, können nachträglich mittels Druckluft oder anderer geeigneter Verfahren wieder geöffnet werden, sodass die volle Schallabsorptionsfunktionalität sofort wieder gegeben ist. Bei Einsatz der Lehmelemente im Außenbereich ist dies nicht unbedingt nötig ist, weil das langfristig durch natürliches "Sandstrahlen" mittels Staub, Wind und Regen geschieht.

Die erfindungsgemäß hergestellten Reetwellerlehmelemente erreichen eine Schallabsorption, gemessen mit dem Impedanzrohr, von mindestens 30%, insbesondere von 45 - 90%, jeweils über das gesamte absorbierbare Frequenzspektrum hinweg.

Die Druckfestigkeit der Lehmelemente ist durch Variation des Pressdruckes im Schalungsverfahren wie auch im Endlosverfahren in einem Bereich von mindestens 1.0 N/mm², vorzugsweise von 1.5 N/mm² bis zu 5 N/mm², einstellbar, sodass Festigkeiten erreicht werden, die auch den Normen und Bauvorschriften des Hochbaus gerecht werden.

Dies ermöglicht den Einsatz und die Verwendung erfindungsgemäß hergestellter Reetwellerlehmelemente zur Errichtung schallabsorbierender tragender und nicht tragender Wände im Hochbau, insbesondere im Wohnbau, einschließlich akustisch wirksamer, klimaregulierender Wände oder Wandelemente in Innenräumen, sowie zur Errichtung von Innenwandverkleidungen, Aussenwänden, Aussenfassaden und Fassadenverkleidungen, jeweils mit schallabsorbierender und wärmedämmender Wirkung. Ein weiteres Anwendungsgebiet sind Lärmschutzwände und nachhaltig gestaltete Begrenzungen empfindlicher Infrastrukturen von beispielsweise Kindergärten, Schulen, Krankenhäusern, oder in Wohngebieten, wobei diese Anwendungen auch einen Beitrag zur Biodiversität in der Insektenwelt leisten, weil die nach außen hin offenen Hohlräume an der Oberfläche der verbauten Lehmelemente von zahlreichen kleineren Insektenarten, wie z.B. Solitärbienen, gerne als Bruthöhlen angenommen werden.

## Patentansprüche

1. Verfahren zur Herstellung von schallabsorbierenden, faserverstärkten Lehmelementen aus Reetwellerlehm, **dadurch gekennzeichnet, dass** es folgende Schritte umfasst:
a) Bereitstellen von Lehm einer Mindestbindigkeit von 50 g/cm2 ;
b) Bereitstellen einer Mischung von Schilfrohrhalmen unterschiedlicher Länge in einem Bereich von 5 bis 50 cm;
c) Einstellen des Wassergehaltes des Lehms durch Zugabe von Wasser bis zum Erreichen einer cremigen und vorzugsweise fließfähigen Konsistenz, sowie optional Zusatz von pflanzlichem und/oder tierischem Nicht-Schilfrohr Fasermaterial;
d) Herstellen von Reetwellerlehm durch Mischen der Schilfrohrhalme mit der cremigen Lehmmasse zwecks Armierung der Lehmmasse durch das Fasermaterial;
e) Überführen der faserarmierten Lehmmasse in eine Schalung oder eine - vorzugsweise kontinuierlich arbeitende - Verdichtungsvorrichtung und Verdichten der faserarmierten Lehmmasse mit einem Druck von mindestens 1 N/mm², vorzugsweise von 1.5 bis 5 N/mm², zur Erzeugung eines vorgeformten Stranges aus Reetwellerlehm;
f) Entfernen der Schalung oder Fördern der verdichteten Lehmmasse aus der Verdichtungsvorrichtung hinaus zu einer Säge- oder Schneidevorrichtung;
g) Abtrennen einer äußersten Schicht von vorzugsweise 1 - 5 cm Dicke von einer oder beiden durch die Schalung erzeugten Seitenwänden des vorgeformten Stranges aus Reetwellerlehm durch Schneiden, Sägen oder Fräsen; oder Abtrennen von quaderförmigen Einzelstücken des vorgeformten Stranges aus Reetwellerlehm durch einen Säge- oder Schneidevorgang quer zur Schalung oder quer zur Förderrichtung der aus der Verdichtungsvorrichtung hinaus geförderten, verdichteten Lehmmasse;
wobei durch das Schneiden, Sägen- oder Fräsen Schilfrohrhalme in verschiedenen Winkeln an- oder durchgeschnitten werden, wodurch an den Oberflächen der Lehmelemente nach außen hin offene Hohlräume gebildet werden.

2. Verfahren nach Anspruch 1, **dadurch gekennzeichnet, dass** die cremige, vorzugsweise fließfähige Lehmmasse nach Absatz (c) mit Stroh, insbesondere Hanfstroh, Getreidestroh, und/oder Maisstroh und/oder tierischem Fasermaterial, insbesondere Schafwolle, vermischt wird.

3. Verfahren nach Anspruch 1 oder 2, **dadurch gekennzeichnet, dass** die Reetwellerlehmmasse 67 - 85 Gew.% Lehm, 12 - 25 Gew.% Wasser und 2 - 11 Gew.% Schilfrohrhalme enthält.

4. Schallabsorbierendes Lehmelement auf Basis einer verdichteten Reetwellerlehmmasse, **dadurch gekennzeichnet, dass** es Lehm einer Mindestbindigkeit von 50 g/cm², sowie als Armierungsmaterial Schilfrohrhalme und gegebenenfalls zusätzliches Nicht-Schilfrohr-Fasermaterial, insbesondere Hanfstroh, Getreidestroh, Maisstroh, und/oder tierische Wollfasern enthält, wobei die Schilfrohrhalme unterschiedliche Längen in einem Bereich von 5 bis 50 cm aufweisen und vorzugsweise ungerichtet kreuz und quer in der Lehmmasse angeordnet sind, und wobei das unter einem Druck von mindestens 1 N/mm2 verdichtete Lehmelement durch Schneiden, Sägen oder Fräsen erzeugte Oberflächen besitzt, die eine Vielzahl an nach außen hin offenen Hohlräumen, gebildet durch an- oder durchgeschnittene Schilfrohrhalme, aufweisen.

5. Schallabsorbierendes Lehmelement nach Anspruch 4, **dadurch gekennzeichnet, dass** es 67 - 85 Gew.% Lehm, 12 - 25 Gew.% Wasser und 2 - 11 Gew.% Schilfrohrhalme enthält.

6. Verwendung eines in Anspruch 4 oder 5 definierten, schallabsorbierenden Lehmelements auf Basis einer verdichteten Reetwellerlehmmasse, zur Errichtung schallabsorbierender tragender und nicht tragender Wände, akustisch wirksamer, klimaregulierender Wände oder Wandelemente in Innenräumen, Innenwandverkleidungen, Aussenwänden, Aussenfassaden und Fassadenverkleidungen im Hochbau, sowie zur Landschaftsgestaltung, zur Errichtung von Lärmschutzwänden und nachhaltig gestalteten Begrenzungen empfindlicher Infrastrukturen von beispielsweise Kindergärten, Schulen, Krankenhäusern, oder in Wohngebieten.
